# EUROPÄISCHE PATENTSCHRIFT

(11) **EP 2 688 725 B1**
(45) Veröffentlichungstag und Bekanntmachung des Hinweises auf die Patenterteilung: **24.02.2016**
(21) Anmeldenummer: 12707986.1
(22) Anmeldetag: 07.03.2012
(51) Int. Cl.: B29C 47/60, B29C 47/84, B29C 47/08, B29C 47/92, B29C 45/60, B29C 45/74

(54) **SCHNECKE ZUR ANWENDUNG IN DER PYROLYSE**
SCREW FOR USE IN PYROLYSIS
VIS POUR UTILISATION EN PYROLYSE

(30) Priorität: 19.03.2011 DE 102011014474
(43) Veröffentlichungstag der Anmeldung: 29.01.2014
(73) Patentinhaber: M.E.E. GmbH, 19061 Schwerin (DE)
(72) Erfinder: WARCHOL, Gerd, 4020 Linz (AT); KEBELMANN, Lutz, 23999 Insel Poel (DE)
(74) Vertreter: Gosdin, Michael
(86) Internationale Anmeldenummer: PCT/EP2012/001004
(87) Internationale Veröffentlichungsnummer: WO 2012/126574

(56) Entgegenhaltungen:
- EP-A1- 0 808 705
- DE-A1- 1 751 961
- DE-A1- 2 057 989
- DE-A1- 4 412 536
- DE-A1- 10 013 474
- JP-A- 53 016 076
- US-A- 3 310 836
- US-A- 3 738 420

## Beschreibung

Die Erfindung betrifft eine Schnecke, die einen um eine Achse drehbar angeordneten Grundkörper umfasst, um den herum sich wendelartig mindestens ein Schneckensteg erstreckt, wobei in der Schnecke mindestens ein Fluidkanal angeordnet ist, der zum Durchleiten eines temperierten Fluids ausgebildet ist, wobei der Fluidkanal als Kanal ausgebildet ist, der in den mindestens einen Schneckensteg eingearbeitet ist und mit diesem wendelartig verläuft, wobei neben dem Kanal mindestens ein zentrisch angeordneter zweiter Kanal ausgebildet ist, wobei der Kanal mit dem zweiten Kanal an beiden Enden der Schnecke fluidisch miteinander verbunden ist.

Schnecken der gattungsgemäßen Art werden eingesetzt, um Gut diverser Art insbesondere zu transportieren, zu verdichten und schließlich zu extrudieren. Diese Maßnahmen kommen beispielsweise bei der Kunststoffverarbeitung in Betracht. Ein anderer relevanter Anwendungsfall ist die pyrolytische Verarbeitung eines Guts. Die Schnecke rotiert in einem Schneckenzylinder, wobei in das zu pyrolysierende Gut zum einen durch mechanische Arbeit Wärmeenergie in das Gut eingebracht wird; zum anderen wird aber auch dadurch Wärmeenergie in das Gut eingebracht, dass durch den genannten Fluidkanal ein erwärmtes Fluid, insbesondere eine erhitzte Flüssigkeit, geleitet wird.

Bei vorbekannten innenbeheizten Schnecken erfolgt über eine Zentralbohrung im Schneckengrundkörper, d. h. im Schneckenkern bzw. in der Schneckenmitte, die Zufuhr eines gas- oder flüssigen Temperiermediums, wobei geeignete Drehdurchführungen vorhanden sind, um von einer stationären Versorgungsquelle die sich drehende Schnecke mit dem Medium zu versorgen. Bei einer ebenfalls vorbekannten elektrischen Beheizung befindet sich ein Heizelement in einer Zentralbohrung der Schnecke. Bei Brennerbeheizung wird eine Brennerflamme unmittelbar vor oder in der Zentralbohrung der Schnecke positioniert.

Eine gattungsgemäße Schnecke ist aus der DE 44 12 536 A1 bekannt. Ähnliche Lösungen zeigen die DE 20 57 989 A1, die EP 0 808 705 A1, die US 3 310 836 A, die DE 17 51 961 A1, die DE 100 13 474 A1, die JP 53 016076 A und die US 3 738 420 A.

Nachteilig ist bei den vorbekannten Lösungen, dass die Möglichkeit des Energieeintrags in das zu verarbeitende Gut sehr begrenzt ist. Bei den vorbekannten Schnecken der gattungsgemäßen Art erfolgt der Wärmefluss vom Temperiermedium ins zu verarbeitende Gut ausschließlich von der Bohrung im Schneckengrundkörper, d. h. vom Schneckenkern bzw. von der Schneckenmitte aus; die Wärmeübertragung erfolgt also nur von der Schneckengrundfläche aus und somit nur über kleine Flächenanteile der Schnecke. Der so entstehende bzw. erzeugbare Temperaturgradient verhindert eine durchgehende Wärmeübertragung an das Gut, das zu fördern bzw. physikalisch und/oder chemisch zu verändern ist.

Dies ist insbesondere bei Prozessen ungünstig, bei denen das zu temperierende Gut zu Ablagerungen an den Stegflanken der der Schnecke neigt, wozu insbesondere auf pyrolytische Prozesse hingewiesen sei. Weiterhin ist es bei den bestehenden Lösungen negativ, dass die Effizienz bei Hochtemperaturanwendungen schlecht ist, was wiederum besonders bei pyrolytischen Prozessen nachteilig zum Tragen kommt.

Der Erfindung liegt die Aufgabe zugrunde, eine Schnecke der eingangs genannten Art so fortzubilden, dass die genannten Nachteile vermieden werden. Demgemäß soll eine Schnecke bereitgestellt werden, bei der es möglich ist, in effizienterer Weise als bisher Wärme ins zu verarbeitende Gut einzubringen. Das soll es insbesondere möglich machen, pyrolytische Prozesse effizienter durchführen zu können, bei denen eine große Wärmemenge über die Schnecke in das zu verarbeitende Gut eingebracht werden muss.

Die Lösung dieser Aufgabe durch die Erfindung ist dadurch gekennzeichnet, dass sich der Kanal und der zweite Kanal an einer Gabelungsstelle am einen Ende der Schnecke voneinander trennen und an einer Zusammenflussstelle am anderen Ende der Schnecke wieder zusammentreffen, so dass der Kanal und der zweite Kanal von einem temperierten Fluid in die gleiche Richtung von einer Fluidzuführrichtung (Z) zu einer Fluidabführrichtung (A) parallel durchströmt werden, wobei in dem zweiten Kanal mindestens eine einstellbare Drossel angeordnet ist, um den Durchfluss von temperiertem Fluid durch den zweiten Kanal zu drosseln.

Dabei ist bevorzugt vorgesehen, dass sich der Kanal radial bis in eine Höhe des Schneckenstegs erstreckt, die mindestens 80 %, vorzugsweise mindestens 90 %, des Außenradius des Schneckenstegs beträgt.

Durch die einstellbare Drossel ist eine Steuerung dahingehend möglich, wie viel Fluid durch den ersten, wendelförmig verlaufenden Kanal und wie viel Fluid durch den zentrischen zweiten Kanal strömen soll.

Das Verfahren zur Herstellung einer solchen Schnecke umfasst die Schritte:
a) Herstellen des Grundkörpers samt angeformtem Schneckensteg;
b) Einarbeiten eines Kanals in den Schneckensteg, wobei der Kanal wendelförmig im Schneckensteg verläuft und wobei Material des Schneckenstegs von der radial außenliegenden Seite des Schneckenstegs aus abgetragen wird;
c) Verschließen des radial außenliegenden Endbereiches des Schneckenstegs mit einem Verschlusselement.

Das Einarbeiten des Kanals in den Schneckensteg (gemäß Merkmal b) erfolgt bevorzugt durch einen Fräsvorgang. Dabei ist besonders bevorzugt vorgesehen, dass ein Fräser, vorzugsweise ein mit seiner Längsachse radial ausgerichteter Fingerfräser, bei rotierender Schnecke entsprechend der Steigung des Schneckenstegs axial geführt wird.

Nachdem der wendelförmig verlaufende Kanal mittels des Fräsers bis zu einer gewünschten radialen Tiefe eingearbeitet ist, kann die radial außen liegende Öffnung des Kanals verschlossen werden, wofür beispielsweise ein gewalztes Blech aufgeschweißt oder aufgelötet wird. Im Falle des Lötens empfiehlt sich der Einsatz eines Hartlots, da die Schnecke im Betrieb höheren Temperaturen ausgesetzt ist.

Der Erfindungsvorschlag stellt also auf eine effizient innenbeheizte (gegebenenfalls auch innengekühlte) Schecke insbesondere für den Transport und die Extrusion eines Guts ab, wobei eine hohe Effizienz der Wärmeübertragung (gegebenenfalls auch der Kälteübertragung) durch die Vergrößerung der Wärme-Übertragungsflächen erreicht wird.

Bevorzugte Anwendungen sind die pyrolytische Verarbeitung eines Gutes, die Kunststoffverarbeitung und die Schüttgutförderung, wobei die vorgeschlagene Schnecke demgemäß in reaktiven chemischen Anlagen, in Kunststoffverarbeitungsmaschinen, in Kühlschneckenförderanlagen und in Trocknungsanlagen bevorzugt zum Einsatz kommt.

Das Erfindungskonzept ermöglicht eine wesentliche Vergrößerung der wärmeübertragenden Fläche zwischen Schnecke und Gut und hierüber eine effizientere Wärmeübertragung.

In der Zeichnung sind Ausführungsbeispiele dargestellt. Es zeigen:
- Fig. 1: den Radialschnitt durch einen Abschnitt einer Schnecke, die zur pyrolytischen Verarbeitung eines Guts eingesetzt wird,
- Fig. 2: die Seitenansicht einer Schnecke nach dem Stand der Technik, die von einem Temperiermedium durchströmt ist, gemäß einer ersten Möglichkeit der Fluidführung,
- Fig. 3: die Seitenansicht einer Schnecke nach dem Stand der Technik gemäß einer zweiten Möglichkeit der Fluidführung und
- Fig. 4: die Seitenansicht einer Schnecke gemäß der Erfindung.

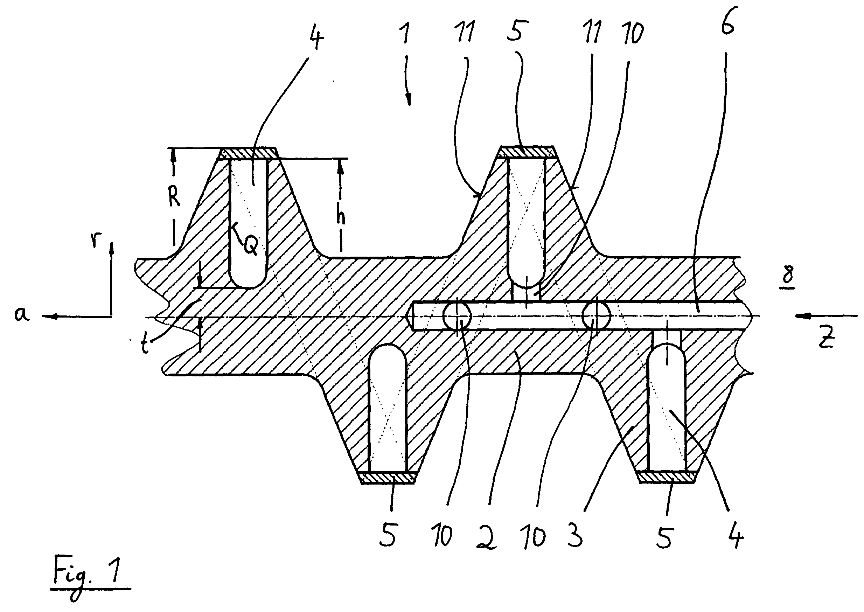

In Fig. 1 ist ein Teil einer Schnecke 1 zu sehen (und zwar im wesentlichen der Bereich nahe des einen axialen Endes der Schnecke), die einen SchneckenGrundkörper 2 aufweist, an dem ein Schneckensteg 3 angeformt ist, der in bekannter Weise wendelförmig um den Grundkörper 2 umläuft. Der Schneckensteg 3 läuft dabei in axialer Richtung a um den Grundkörper 2 um. Dargestellt ist eine eingängige Schnecke; genauso wäre das erfindungsgemäße Konzept natürlich auch bei einer mehrgängigen Schnecke einsetzbar. Von einem Ende 8 der Schnecke 1 wird temperiertes (erwärmtes) Fluid - vorliegend ist an eine erwärmte Flüssigkeit gedacht - in einer Fluidzuführrichtung Z der Schnecke 1 zugeführt, und zwar in einen zweiten Kanal 6. Über drei Verbindungsbohrungen 10 ist der zweite Kanal 6 mit einem Kanal 4 fluidisch verbunden.

Der Kanal 4 ist in den Schneckensteg 3 eingearbeitet. Dabei ist vorgesehen, dass ein Kanal mit einer Querschnittsform Q - wie in Fig. 1 ersichtlich - in den Schneckensteg 3 eingefräst ist, wobei der Kanal 4 mit gleicher Steigung wie der Schneckensteg 3 in diesem verläuft. Demgemäß weist der Schneckensteg 3 entlang seines wendelförmigen Verlaufs überall den Kanal 4 auf. Es sei bemerkt, dass es natürlich keinesfalls zwingend ist, dass sich der Kanal 4 über die gesamte axiale Länge der Schnecke 1 bzw. des Schneckenstegs 3 erstreckt; es können auch Abschnitte des Schneckenstegs 3 vorgesehen sein, die frei vom Kanal 4 sind.

Die Querschnittsform Q kann natürlich den aktuellen Bedürfnissen angepasst werden. So kann insbesondere eine Form vorteilhaft sein, die sich radial nach innen verbreitert, um zur Flanke 11 gegebenenfalls eine konstante Wanddicke zu haben. Die Einarbeitung des Kanals 4 ist in diesem Falle natürlich aufwändiger.

Im radial äußeren Bereich des Schneckenstegs 3 ist der Kanal 4 durch ein Verschlusselement 5 verschlossen. Hierbei kann es sich um ein gewalztes Blech handeln, das von außen auf den (ausgefrästen) Schneckensteg 3 aufgelegt und dann an diesem festgeschweißt oder festgelötet wird. Möglich ist es auch, dass ein Rohr über die Schnecke 1 aufgeschoben wird, das im Bereich der radial äußeren Enden des Schneckenstegs 3 festgeschweißt wird; der nicht benötigte Teil des Rohres kann dann abgetragen (ausgeschnitten) werden.

Wie zu sehen ist, erstreckt sich der Kanal 4 bis zu einer Tiefe t im Schneckensteg 3 radial nach innen. Weiter ist die Höhe h eingetragen, bis zu der sich der Kanal 4 radial nach außen erstreckt. Für die Tiefe t hat sich ein Wert bewährt, der zwischen 10 % und 30 % des Außenradius R des Schneckenstegs 3 entspricht. Indes ist für die Höhe h bevorzugt ein Wert vorgesehen, der mindestens 80 % des Außenradius R des Schneckenstegs 3 beträgt; im Ausführungsbeispiel liegt die Höhe h bei ca. 93 % des Außenradius R.

Nachdem das temperierte Fluid über den zweiten Kanal 6 in Fluidzuführrichtung Z zugeführt wurde, gelangt es also über die Verbindungsbohrungen 10 in den wendelförmig im Schneckensteg 3 umlaufenden Kanal 4 und ist so in der Lage, die Flanken 11 des Schneckenstegs 3 effizient zu temperieren, d. h. vorliegend zu erhitzen.

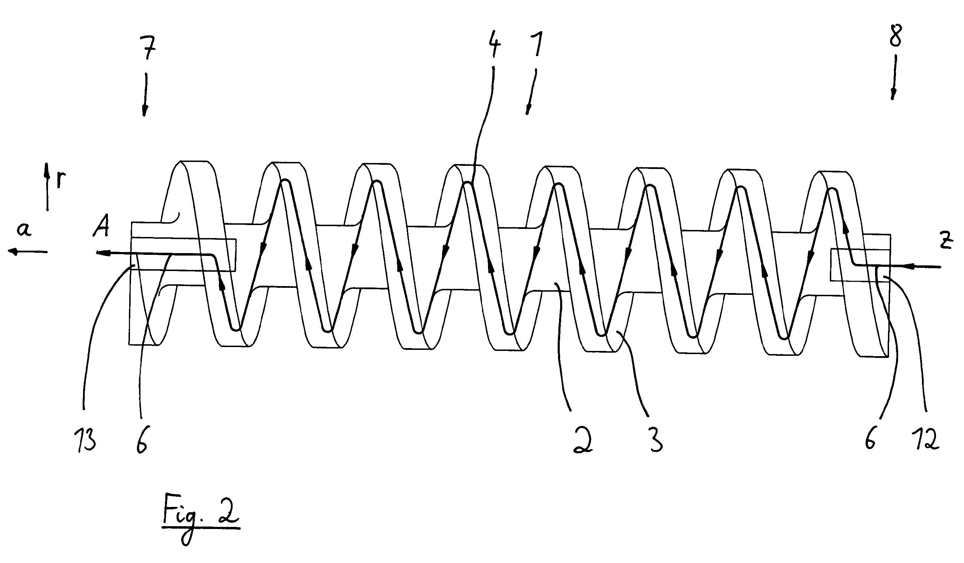

Dieses Grundprinzip ist in Fig. 2 noch einmal schematisch dargestellt. Das temperierte Fluid wird am Ende 8 der Schnecke 1 in Fluidzuführrichtung Z über eine Drehdurchführung 12 der Schnecke 1 und namentlich ein kurzes Stück eines zweiten Kanals 6 zentral zugeführt. Nach der Art, wie sie in Fig. 1 dargestellt ist, gelangt dann das temperierte Fluid in den Kanal 4, um wendelförmig im Schneckensteg 3 zu strömen. Am Ende 7 der Schnecke 1 verlässt das temperierte Fluid, das jetzt über die Flanken 11 des Schneckenstegs 3 Wärme an das von der Schnecke 1 geförderte Gut abgegeben hat, in analoger Weise wieder die Schnecke, wobei wiederum ein kurzes Stück zweiter Kanal 6 und eine Drehdurchführung 13 vorgesehen ist. Das Fluid strömt in Fluidabführrichtung A ab.

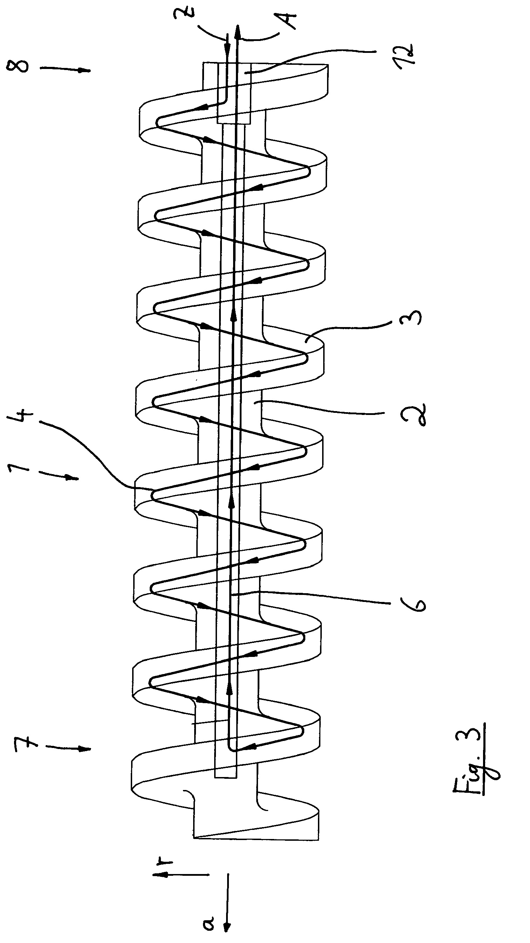

Bei der Lösung gemäß Fig. 3 ist eine andere Fluidführung vorgesehen. Das temperierte Fluid gelangt wiederum am Ende 8 der Schnecke in Fluidzuführrichtung Z über eine Drehdurchführung 12 in die Schnecke 1. Über ein kurzes Stück eines zweiten Kanals 6 gelangt das Fluid - wie in Fig. 1 dargestellt - in den wendelförmig verlaufenden Kanal 4, um in axiale Richtung a der Schnecke wendelförmig umzulaufen und Wärme über die Flanken 11 des Schneckenstegs 3 abzugeben. Am Ende 7 der Schnecke 1 geht der wendelförmig verlaufende Kanal 4 in einen zweiten Kanal 6 über, der zentral durch die gesamte Schnecke 1 verläuft, wie es aus Fig. 3 hervorgeht. Das Fluid strömt nunmehr im Kanal 6 in Gegenrichtung zurück zum Ende 8 der Schnecke 1 und verlässt diese über die Drehzuführung 12 in Fluidabführrichtung A. Gemäß dieser Ausführungsform steht also der zentrale zweite Kanal 6 wie im Stand der Technik der Übertragung von Wärme vom temperierten Fluid an das zu fördernde Gut zur Verfügung.

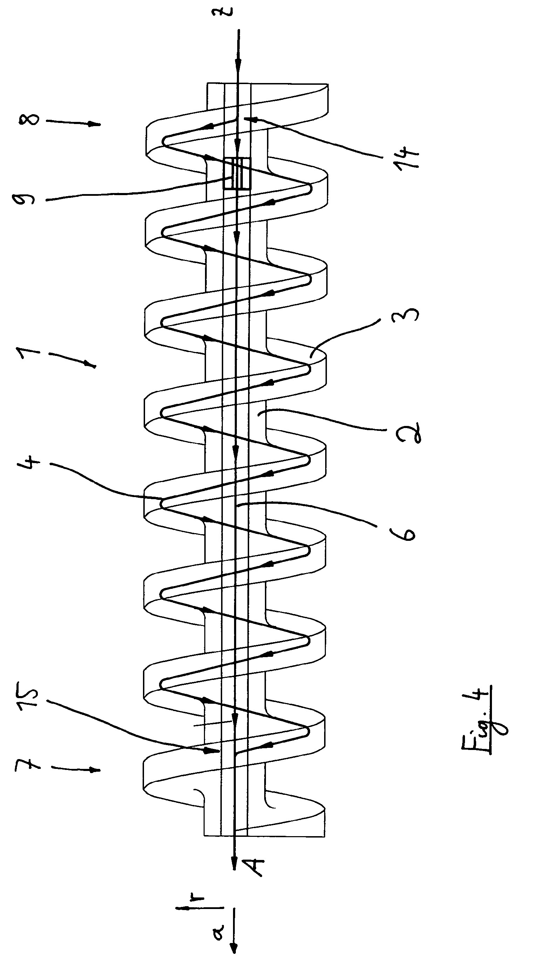

Eine Schnecke gemäß der Erfindung ist in Fig. 4 dargestellt. Hier gelangt das Fluid am Ende 8 der Schnecke in Fluidzuführrichtung Z in die Schnecke. Der zentral angeordnete zweite Kanal 6 gabelt sich an der Gabelungsstelle 14 und läuft einmal zentral im Inneren der Schnecke 1 weiter; an der Gabelungsstelle 14 beginnt weiterhin der wendelförmig verlaufende Kanal 4 nach der in Fig. 1 dargestellten Weise. Am Ende 7 der Schnecke 1 werden an der Zusammenflussstelle 15 der wendelförmig verlaufende Kanal 4 und der zentrale zweite Kanal 6 wieder zusammengeführt; von hier ab verlässt das Fluid in Fluidabführrichtung A die Schnecke 1 durch den zentralen zweiten Kanal 6.

Damit das Verhältnis der Fluidströme einmal im zentralen zweiten Kanal 6 und im wendelförmig verlaufenden Kanal 4 einem gewünschten Wert entspricht, ist eine einstellbare Drossel 9 im zweiten Kanal 6 angeordnet. Durch Einstellung des Drosselquerschnitts kann definiert werden, welcher Volumenstrom an temperiertem Fluid durch den Kanal 4 und welcher Volumenstrom durch den zweiten Kanal 6 strömt.

Durch den Einsatz der einstellbaren Strömungsdrossel 9 im Schneckenzentralkanal kann das Strömungsverhältnis zwischen Schneckenzentralkanal 6 und wendelförmigem Kanal 4 so eingestellt werden, das eine mathematische Proportionalität zwischen den Wärme-Übertragungsflächen des Schneckenkerns bzw. Schneckengrundkörpers und den Wärme-Übertragungsflächen der Schneckenstege 11 besteht. Auch andere Strömungsverhältnisse sind verfahrenstechnisch denkbar, z. B. beim Einsatz einer Außenbeheizung der Gesamteinrichtung.

Die als Transport-, Extruder-, bzw. Verdichterschnecke ausgebildete Schnecke 1 ist also konstruktiv so gestaltet, dass ein Stück der Zentralbohrung (zweiter Kanal 6) als Zu- bzw. Abfluss des Heiz- bzw. Kühlmediums dient.

Die Schneckenstege sind so gestaltet, dass entsprechend der verfahrenstechnisch notwendigen Schneckensteigung und Wendelstärke ein nach außen verschlossener Hohlraum (Kanal 4) eingearbeitet ist, der bei Bedarf in Verbindung mit der Zentralbohrung (zweiter Kanal 6) steht.

Die zur Wärmeübertragung zur Verfügung stehende Übertragungsfläche wird damit, im Vergleich mit vorbekannten Lösungen, wesentlich vergrößert und die Möglichkeit zur Wärmeübertragung entsprechend verbessert. Vorteilhaft ist, dass ein sehr breiter Temperaturanwendungsbereich für die Verarbeitung eines Guts möglich wird.

Dies macht es insbesondere möglich, pyrolytische Prozesse mit der vorgeschlagenen Schnecke verbessert durchzuführen, bei denen eine sehr hohe Temperatur im zu verarbeitenden Gut erforderlich ist, die durch ein heißes temperiertes Fluid, das durch die Schnecke gefördert wird, erzeugt werden kann. Es kann also mit der vorgeschlagenen Konzeption ein hoher Energiestrom vom temperierten Fluid in das zu verarbeitende Gut eingeleitet werden.

Besonders vorteilhaft hat sich die vorgeschlagene Gestaltung einer Schnecke 1 für den Transport von Thermoölen, Salzlösungen als flüssiges Sorbens und ähnlichen Flüssigkeiten erwiesen; dasselbe gilt auch für den Transport gasförmiger Medien. Hierbei können mit hohem Wirkungsgrad Temperaturen bis über 500 °C realisiert werden, wobei eine sehr gleichmäßige Wärmeverteilung über die gesamte Bauteiloberfläche möglich ist. Dies wiederum ist besonders für Schnecken in pyrolytischen Anlagen vorteilhaft.

Die vorgeschlagene Schnecke kann natürlich in beliebigen Anlagen eingesetzt werden, sowohl in Einschnecken- als auch in Mehrschneckenanlagen.

Die Schneckenrotation bewirkt eine sehr gute Beweglichkeit des Wärmeträgers in den Schneckenstegen. Hierdurch ist das vorgeschlagene Konzept für die vielfältigsten fluiden Temperiermedien geeignet, ohne dass Stagnationserscheinungen auftreten. Daher sind bei der konstruktiven Gestaltung der Kanäle 4 viele Variationen möglich.

Für pyrolytische Anwendungen ist es wichtig, das zu verarbeitende Gut zumindest zeitweise unter Sauerstoffabschluss zu halten. Diese Anforderung kann mit der vorgeschlagenen Lösung problemlos erfüllt werden.

### Bezugszeichenliste:

- 1: Schnecke
- 2: Grundkörper
- 3: Schneckensteg
- 4: Fluidkanal
- 5: Verschlusselement
- 6: zweiter Kanal
- 7: Ende der Schnecke
- 8: Ende der Schnecke
- 9: Drossel
- 10: Verbindungsbohrung
- 11: Flanke
- 12: Drehdurchführung
- 13: Drehdurchführung
- 14: Gabelungsstelle
- 15: Zusammenflussstelle

- a: axiale Richtung / Achse
- r: radiale Richtung
- h: Höhe
- t: Tiefe
- R: Außenradius
- Z: Fluidzuführrichtung
- A: Fluidabführrichtung
- Q: Querschnittsform

## Patentansprüche

1. Schnecke (1) zur Anwendung in der Pyrolyse, die einen um eine Achse (a) drehbar angeordneten Grundkörper (2) umfasst, um den herum sich wendelartig mindestens ein Schneckensteg (3) erstreckt, wobei in der Schnecke (1) mindestens ein Fluidkanal (4) angeordnet ist, der zum Durchleiten eines temperierten Fluids ausgebildet ist, wobei der Fluidkanal (4) als Kanal ausgebildet ist, der in den mindestens einen Schneckensteg (3) eingearbeitet ist und mit diesem wendelartig verläuft, wobei neben dem Kanal (4) mindestens ein zentrisch angeordneter zweiter Kanal (6) ausgebildet ist, wobei der Kanal (4) mit dem zweiten Kanal (6) an beiden Enden (7, 8) der Schnecke (1) fluidisch miteinander verbunden ist,
**dadurch gekennzeichnet, dass**
sich der Kanal (4) und der zweite Kanal (6) an einer Gabelungsstelle (14) am einen Ende (8) der Schnecke (1) voneinander trennen und an einer Zusammenflussstelle (15) am anderen Ende (7) der Schnecke (1) wieder zusammentreffen, so dass der Kanal (4) und der zweite Kanal (6) von einem temperierten Fluid in die gleiche Richtung von einer Fluidzuführrichtung (Z) zu einer Fluidabführrichtung (A) parallel durchströmt werden, wobei in dem zweiten Kanal (6) mindestens eine einstellbare Drossel (9) angeordnet ist, um den Durchfluss von temperiertem Fluid durch den zweiten Kanal (6) zu drosseln.

2. Schnecke nach Anspruch 1, **dadurch gekennzeichnet, dass** sich der Kanal (4) radial (r) bis in eine Höhe (h) des Schneckenstegs (3) erstreckt, die mindestens 80 %, vorzugsweise mindestens 90 %, des Außenradius (R) des Schneckenstegs (3) beträgt.

3. Schnecke nach Anspruch 1 oder 2, **dadurch gekennzeichnet, dass** der Kanal (4) im radial äußeren Bereich des Schneckenstegs (3) durch ein Verschlusselement (5), insbesondere durch ein Verschlussblech, abgeschlossen ist.

4. Schnecke nach Anspruch 3, **dadurch gekennzeichnet, dass** das Verschlusselement (5) auf dem Schneckensteg (3) angeschweißt oder angelötet ist.

## Claims

1. Screw (1) for the application in pyrolysis, comprising a base body (2) which is rotatable around an axis (a), wherein at least one screw thread (3) extends helically around the base body (2), wherein at least one fluid channel (4) is arranged in the screw (1) which fluid channel (4) is designed for conducting a tempered fluid, wherein the fluid channel (4) is designed as a channel which is machined into the at least one screw thread (3) and runs helically with it, wherein beside the fluid channel (4) at least one second channel (6) is arranged centrically, wherein the fluid channel (4) is connected fluidly with the second channel (6) at both ends (7, 8) of the screw (1),
**characterized in that**
the fluid channel (4) and the second channel (6) separate from another at a junction location (14) at one end (8) of the screw (1) and merge again at a confluence location (15) at the other end (7) of the screw (1), so that the fluid channel (4) and the second channel (6) are parallel flown through by a tempered fluid in the same direction from a direction of fluid feeding (Z) to a direction of fluid discharge (A), wherein in the second channel (6) at least one adjustable throttle (9) is arranged to throttle the flow of tempered fluid through the second channel (6).

2. Screw according to claim 1, **characterized in that** the fluid channel (4) extends radially (r) up to a height (h) of the screw thread (3) which is at least 80 %, preferably at least 90 %, of the outer radius (R) of the screw thread (3).

3. Screw according to claim 1 or 2, **characterized in that** the fluid channel (4) is closed in the radial outer region of the screw thread (3) by a closing element (5), especially by a closure steel sheet.

4. Screw according to claim 3, **characterized in that** the closing element (5) is welded or soldered on the screw thread (3).

## Revendications

1. Vis (1) pour une utilisation en pyrolyse, comprenant un corps de base (2) disposé de manière à pouvoir tourner autour d'un axe (a), autour duquel s'étend sous forme hélicoïdale au moins un filet de vis (3), au moins un canal de fluide (4) étant disposé dans la vis (1), lequel est réalisé en vue de conduire un fluide régulé en température, le canal de fluide (4) étant réalisé sous forme de canal qui est pratiqué dans l'au moins un filet de vis (3) et qui s'étend avec celui-ci sous forme hélicoïdale, au moins un deuxième canal (6) disposé centralement étant réalisé à côté du canal (4), le canal (4) étant connecté fluidiquement au deuxième canal (6) au niveau des deux extrémités (7, 8) de la vis (1),
**caractérisée en ce que**
le canal (4) et le deuxième canal (6) se séparent l'un de l'autre au niveau d'une région de bifurcation (14) à une extrémité (8) de la vis (1), et se rejoignent à nouveau au niveau d'une zone de jonction des flux (15) à l'autre extrémité (7) de la vis (1), de telle sorte que le canal (4) et le deuxième canal (6) soient parcourus en parallèle par un fluide régulé en température dans la même direction d'une direction d'alimentation en fluide (Z) à une direction d'évacuation de fluide (A), au moins un étranglement ajustable (9) étant disposé dans le deuxième canal (6), afin d'étrangler le passage de fluide régulé en température à travers le deuxième canal (6).

2. Vis selon la revendication 1, **caractérisée en ce que** le canal (4) s'étend radialement (r) jusqu'à une hauteur (h) du filet de vis (3) qui représente au moins 80 %, de préférence au moins 90 %, du rayon extérieur (R) du filet de vis (3).

3. Vis selon la revendication 1 ou 2, **caractérisée en ce que** le canal (4) est terminé dans la région radialement extérieure du filet de vis (3) par un élément de fermeture (5), en particulier par une tôle de fermeture.

4. Vis selon la revendication 3, **caractérisée en ce que** l'élément de fermeture (5) est raccordé au filet de vis (3) par soudage ou brasage.
